# EUROPEAN PATENT APPLICATION

(11) **EP 1 768 208 A2**
(43) Date of publication of application: **28.03.2007**
(21) Application number: 06254796.3
(22) Date of filing: 14.09.2006
(51) Int. Cl.: H01M 8/12

(54) **High performance anode-supported solid oxide fuel cell**

(30) Priority: 15.09.2005 KR 20050086504
(71) Applicant: Korea Institute of Science and Technology, Seoul (KR)
(72) Inventor: Lee Jong-Ho, Gwangjin-gu, Seoul (KR); Lee Hae-Weon, Dongdaemun-gu, Seoul (KR); Kim Joo-Sun, Goyang, Gyeonggi-do (KR); Son Ji-Won, Seoul (KR); Song Hue-Sup, Seoul (KR); Kim Hyong-Chul Dormitory of Korea Inst. & Tech, Seoul (KR); Jung Hwa-Young, Nam-gu, Incheon (KR)
(74) Representative: Jenkins, Peter David

(57) **Abstract**

Disclosed is an anode supporter for a solid oxide fuel cell (SOFC). The SOFC comprises an anode supporter having a high gas permeability, a high electrical conductivity, a high electrochemical activity, a high mechanical strength, and a large area; an anode functional layer for attenuating a surface defect of the anode supporter and maximizing an electrochemical activity of the anode; an electrolyte having a ultra-thin film; a cathode functional layer for removing an interface reaction between the electrolyte and the cathode and enhancing an electrochemical reaction at the cathode; a cathode having an excellent interface bonding characteristic with the cathode functional layer and a high electrical conductivity; and a current collect layer for maximizing an electrical connection between the cathode and a separator or interconnector. Accordingly, a performance of the single cell of a large area is enhanced.

## Description

### RELATED APPLICATION

The present disclosure relates to subject matter contained in priority Korean Application No. 10-2003-0085274, filed on November 27, 2003, which is herein expressly incorporated by reference in its entirety.

### BACKGROUND OF THE INVENTION

### 1. Field of the Invention

The present invention relates to a solid oxide fuel cell, and more particularly, to a method for preparing an optimum composition for a single cell component (anode, cathode and electrolyte).

### 2. Description of the Background Art

A solid oxide fuel cell (SOFC) is operated at a high temperature of 600°C~1000°C, and has the most excellent power conversion efficiency among the related art fuel cells. Also, the SOFC can be variously selected and used heat thereof is recyclable. Owing to the advantages, the SOFC can be applied to a residential fuel cell of 1~5KW, a large electric generation more than 200KW, and a larger scale hybrid power generation system with a gas turbine.

The SOFC consists of an oxygen ion conductive electrolyte, and an anode and a cathode positioned at both surfaces of the electrolyte. When air and a fuel are respectively supplied to a cathode and an anode of a single cell, a reduction for oxygen is performed at the cathode thus to generate oxygen ions. Then, the oxygen ions moved to the anode through the electrolyte react with hydrogen supplied from the anode thus to generate water. Herein, electrons are generated at the anode, and the electrons are exhausted at the cathode. Accordingly, the anode and the cathode are connected to each other so as to generate electricity.

The SOFC uses doped-ZrO₂ as the electrolyte, and a Yttriz Stabilized Zirconi (YSZ: zirconia doped with Y₂O₃) is being mainly used. Various SOFCs are being developed with different configuration of a single cell and a stack, for different operation temperatures. The single cell is divided into an electrolyte supported type and an electrode supported type according to a type of structural supporter. The electrode supported type is divided into a cathode supported type and an anode supported type. The anode supported type single cell has a structure that an anode functional layer, an electrolyte, and a cathode layer are sequentially formed on an anode supporter.

In the anode supported type SOFC, the anode supporter has to be controlled to have a high gas permeability, a high electrical conductivity, and a high electrochemical activity. The anode supporter has to be designed so as to have a mechanical strength as a supporter of a single cell, and so as to fabricate an anode of a large area. An anode functional layer for attenuating a surface defect of an anode supporter and maximizing an electrochemical activation at the anode is provided. An electrolyte having a ultra-thin film has to be designed. A cathode functional layer for removing an interface reaction between the electrolyte and the cathode and enhancing an electrochemical reaction at the cathode is provided. A cathode having an excellent interface bonding characteristic with the cathode functional layer and a high electrical conductivity is provided. Also, a current collect layer for maximizing an electrical connection between the cathode and a interconnector (or separator) is provided.

### SUMMARY OF THE INVENTION

Therefore, an object of the present invention is to provide an optimum composition of each unit cell components (anode, cathode and electrolyte) for a solid oxide fuel cell (SOFC) having an excellent performance.

Another object of the present invention is to provide general criterion to determine the optimum composition of unit cell components for a solid oxide fuel cell capable of being applied to different shape, size, and operation conditions of a single cell.

To achieve these and other advantages and in accordance with the purpose of the present invention, as embodied and broadly described herein, there is provided a method for preparing an optimum composition of each unit cell component for a solid oxide fuel cell (SOFC). The composition includes not only a combination ratio between different materials, but also a combination ratio of a homo-material having different powder characteristics.

The method for preparing an optimum composition of each component for_a solid oxide fuel cell (SOFC), comprises: preparing a slurry consisting of uniformly dispersed NiO powder, YSZ powder, and a binding material; spraying the slurry into liquid for the condensation and drying of granule at a temperature less than 70°C thus preparing a granule consisting of the uniformly-distributed powder and the binding material; filling the dried granule in a mold, and fabricating an anode of a desired shape by a thermoset molding method; screen-printing an anode functional layer on an anode supporter; screen-printing an electrolyte on the anode functional layer, and performing a simultaneous sintering; and sequentially screen-printing a cathode functional layer, a cathode, a cathode current collect layer on an electrolyte-coated anode.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a flowchart sequentially showing a method for fabricating an anode supported-solid oxide fuel cell according to the present invention;
FIG. 2 is a schematic view showing a construction of a single cell according to the present invention;
FIG. 3 is a photo showing a microstructure of a cross section of a single cell including an anode functional layer;
FIG. 4 is a graph showing an enhanced performance of a single cell when advanced anode and cathode are applied thereto;
FIG. 5 is a photo showing a microstructure of a cross section of a single cell including a cathode functional layer;
FIG. 6 is a graph showing a performance change of a single cell according to a powder size of an anode;
FIG. 7 is a photo showing a microstructure of a single cell including a cathode current collect layer; and
FIG. 8 is a graph showing an enhanced performance of a single cell resulting from a cathode current collect layer.

### DETAILED DESCRIPTION OF THE INVENTION

Reference will now be made in detail to the preferred embodiments of the present invention, examples of which are illustrated in the accompanying drawings.

The present invention provides a method for preparing an optimum composition of each unit cell component for a solid oxide fuel cell (SOFC). The composition ratio is applied not only to different materials, but also to the same material having different powder characteristics.

More concretely, the present invention provides an anode supporter for a SOFC implemented as a composite between an ion-conductive oxide and a transition metal oxide having an electron conductivity. As the ion-conductive oxide, a coarse powder and fine power having an average particle diameter ratio of 20:1∼5:1 are used.

The ion-conductive oxide is selected from a group consisting of doped zirconia, doped ceria, Perovskite-based oxide, and a combination therebetween.

The present invention also provides an SOFC including an anode supporter, in which an anode functional layer, an electrolyte, a cathode functional layer, a cathode, and a current collect layer are sequentially formed on the anode supporter.

The anode functional layer uses an ion-conductive oxide and a transition metal oxide as a starting material, and the ion-conductive oxide is selected from a group consisting of doped zirconia, doped ceria, Perovskite-based oxide, and a combination therebetween. The ion-conductive oxide has a particle diameter corresponding to an intermediate size between the coarse powder and the fine powder used at the anode supporter. The transition metal oxide includes a metal having a catalytic activity such as Ni, Cu, Fe etc.

Hereinafter, a preferred embodiment of the present invention will be explained with reference to the attached drawings.

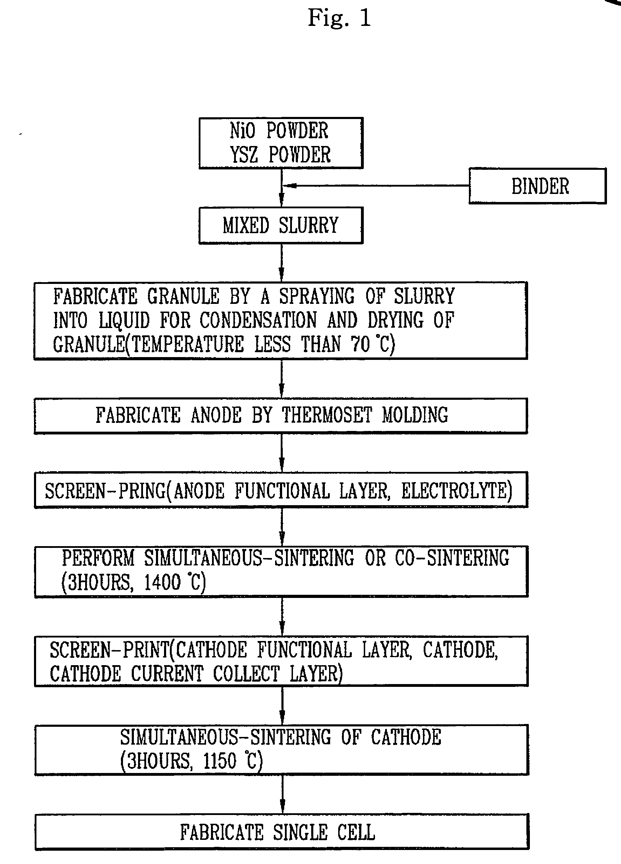

FIG. 1 is a flowchart sequentially showing a method for fabricating an anode supported-solid oxide fuel cell according to the present invention. As shown, the method for preparing an optimum composition of each component for a solid oxide fuel cell (SOFC), comprises: preparing a slurry consisting of uniformly dispersed NiO powder, YSZ powder, and a binding material; spraying the slurry into liquid for condensation and drying of granule at a temperature less than 70°C thus preparing a granule consisting of the uniformly-distributed powder and the binding material; filling the dried granule in a mold, and fabricating an anode of a desired shape by a thermoset molding method; screen-printing an anode functional layer on an anode supporter; screen-printing an electrolyte on the anode functional layer, and performing a simultaneous sintering; and sequentially screen-printing a cathode functional layer, a cathode, a cathode current collect layer on an electrolyte-coated anode, and performing a simultaneous sintering.

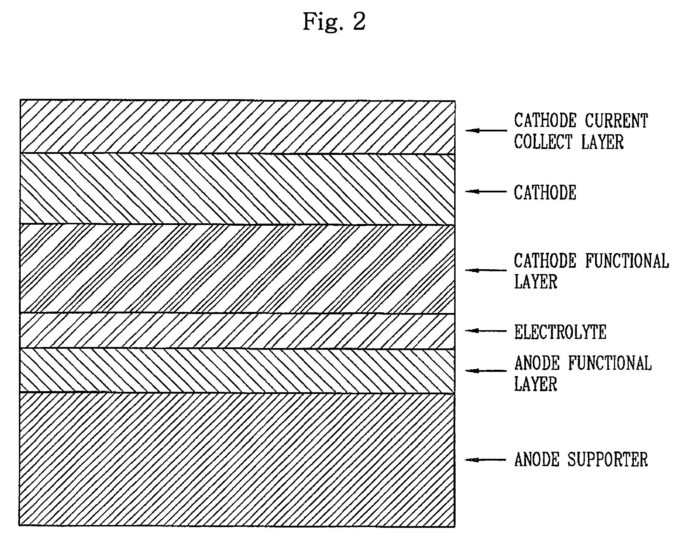

FIG. 2 is a schematic view showing a construction of a single cell according to the present invention. In the present invention, an Ni-YSZ anode, a YSZ electrolyte, and an LSM cathode were used to fabricate a single cell. The single cell according to the present invention consists of a porous anode supporter having a thickness of 0.3∼1mm, an anode functional layer of 5~50µm, an electrolyte of 5~20µm, and a composite cathode layer of 25~80µm. The composite cathode layer is composed of a cathode functional layer, a cathode, and a current collect layer.

Hereinafter, each component of the SOFC according to the present invention will be explained.

### Anode Supporter

An anode supporter of an anode supported SOFC has to be provided with a mechanical property to support a multi-layered single cell, and has to be provided with an electrochemical property to perform an oxidation of a fuel. Also, the anode supporter has to have an excellent conductivity and a high gas permeability.

The mechanical property of the anode has to be strong enough to overcome the stress induced not only from a mechanical stress in anode supporter but also from a thermal expansion mismatch with an electrolyte on the supporter, thereby preventing a defect generation during a thermal cycle. The anode not only serves as a conducting body to transmit electricity but also enables an oxidation of a fuel at the anode. Accordingly, only a catalytically active metal can be used as the anode. A catalyst having a high catalytic activity has to be included in the anode so as to activate an oxidation of the fuel, and a concentration of an active reaction site has to be highly maintained in the anode. The anode supporter has to smoothly supply a fuel up to a reaction site where an electrochemical reaction of a fuel occurs, and has to smoothly exhaust water vapor generated when the fuel is oxidized. Accordingly, the anode supporter has to have a porous structure having pores serving as a passage of a reactant or a product.

In order to satisfy the properties, a composite between an ion-conductive oxide and a metal having an electrochemical activity and an excellent electrical conductivity is used as the anode. A composition ration between the oxide and the metal is controlled thus to control a mechanical strength and a thermal expansion coefficient. Also, the composition ratio between the oxide and the metal is controlled so as to optimize a combination between an electrical conductivity and a gas permeability that are conflict properties to each other. A porosity of the composite is determined with consideration of a mechanical property and a gas permeability, and an active reaction site of a fuel has to be maximized within an allowable porosity.

The most representative composition for the anode is porous Ni-Yttria Stabilized Zirconia (YSZ). The Ni has a catalytically active characteristic for a fuel and a sufficient electron conductivity, and the YSZ has a high ionic conductivity as an ion conducting media.

The anode supporter serving as a supporter in the single cell for a SOFC has the following composition according to a required condition. The starting material of anode supporter (an anode functional layer that will be later explained) has a composite between NiO (further reduced to Ni) and YSZ of an ion-conductive oxide. An Ni-YSZ serves as a composite anode of the single cell in a reduction atmosphere.

A mechanical property of the anode supporter can be changed according to a particle characteristic of the ion-conductive oxide. As the ion-conductive oxide, coarse powder and fine power having an average particle diameter ratio of 20:1∼5:1 were used. In case of using only fine YSZ powder, a mechanical strength of the anode supporter is increased. However, since a sintering shrinkage of the anode supporter is larger than that of the electrolyte, a defect can be easily generated during co-sintering of the anode and the electrolyte. On the contrary, in case of using only coarse YSZ powder, the mechanical strength of the anode supporter is lowered and a porosity more than necessity occurs. Accordingly, when the coarse YSZ powder having a low sintering degree and the fine YSZ powder having a high sintering degree are properly combined to each other, a optimum thermal mechanical property can be obtained. In the present invention, the coarse YSZ powder and the fine YSZ powder are mixed to each other with a ratio of approximately 8:2 ∼5:5. When the mixture ratio between the coarse YSZ powder and the fine YSZ powder is 8:2, a simultaneous sintering (or co-sintering) for the anode and the electrolyte is facilitated. Also, when the mixture ratio between the coarse YSZ powder and the fine YSZ powder is 5:5, the mechanical strength of the anode supporter is increased thus to make the thickness of the anode supporter be thin down to maximum 300µm. Preferably, a volume ratio between the coarse YSZ powder and the fine YSZ powder of the ion-conductive oxide of the anode supporter is 55:45∼45:55.

In the present invention, two kinds of YSZ powder and one kind of NiO powder were used as the anode supporter. The used powder for the anode supporter had a following average particle size. The YSZ powder had average particle diameters of 3µm and 0.2 µm having a large difference therebetween. Also, the NiO had an average particle diameter of 0.8µm. The reason why the two kinds of YSZ powder having different average diameters are used is in order to control a mechanical property and an electrochemical property of the anode supporter. In the present invention, a ratio between the coarse YSZ powder and the fine YSZ powder was 50:50.

In order to maintain a mechanical strength of the anode supporter, the volume ratio of the YSZ serving as an oxide can be controlled within a range of 40%~70% when compared to the Ni after the reduction. The more increased the volume ratio of the oxide is, the more increased the mechanical strength is and the more similar a thermal expansion coefficient between the electrolytes is. Preferably, a volume ratio between the ion-conductive oxide and the metal in a reduced state is 65:35∼55:45. It is advantageous to increase a volume ratio of the metal so as to obtain a sufficient electrical conductivity of the anode (100S/cm at an operation temperature). However, the volume ratio of the metal is made to be less than 60% in the Ni-YSZ composite due to the mechanical property and the thermal expansion coefficient. In order to obtain the mechanical property of the anode supporter, the volume ratio of the metal has to be lowered and the conductivity has to be maintained. The volume ratio of the metal can be lowered down to 30% within a range of a sufficient electrical conductivity of the anode supporter.

Not only Ni but also a transition metal having a catalytic activity such as Cu, Fe etc. can be used as the metallic component of anode. The transition metal oxide has a particle diameter corresponding to an intermediate size between the coarse ion conducting oxide powder and the fine ion conducting oxide powder. Preferably, an average diameter ratio between the transition metal oxide and the fine ion conductive oxide powder is 6:1~3:1.

The following table 1 shows a volume ratio of the YSZ and Ni after a reduction, and a final porosity of anode supporter.

| Ni volume ratio (%) | YSZ volume ratio (%) | Final porosity (%) |
|---|---|---|
| 60 | 40 | 55 |
| 50 | 50 | 48 |
| 45 | 55 | 41 |
| 40 | 60 | 38 |
| 35 | 65 | 34 |
| 30 | 70 | 28 |

As shown in the table 1, the porosity of the anode supporter is changed within a range of 28%~55% according to each volume ratio of the Ni and the YSZ. When only the anode supporter is used as an anode, a proper porosity is 35%~45%. However, the porosity of the anode supporter may be more increased than the 35%~45% when the anode functional layer is separately constructed in the present invention. However, when the porosity is increased by increasing the amount of the Ni, the anode supporter has a problem in a mechanical property. Accordingly, it is advantageous to increase the porosity of the anode supporter by increasing the powder fraction of the coarse YSZ powder or by lowering a sintering temperature in the simultaneous sintering step after coating the electrolyte.

### Anode functional layer

Since the anode of the anode supported single cell has a largest thickness, a reactant and a product are not smoothly moved thus to have a severe problem in a concentration polarization loss at the anode. Accordingly, the anode supporter is designed to have an enhanced gas permeability even if an electrochemical activity becomes low. Recently, an anode functional layer is added between the anode supporter and the electrolyte so as to back-up the low electrochemical activation of the anode supporter.

Since the anode functional layer serves to compensate the low electrochemical activity of anode supporter, it is implemented as a composite between an electron-conductive metal and an ion-conductive oxide. The anode functional layer is designed so as to enhance an electrochemical activity and a concentration of an active reaction sites at the anode. Accordingly, the anode functional layer is designed so as to have a thin thickness and a porosity lower than that of the anode supporter, thereby not having a concentration polarization loss. The anode functional layer serves not only as an electrochemical activation layer but also as a buffer layer to coat a thin and dense electrolyte on a porous anode supporter. Accordingly, the anode functional layer is constructed so as to have a minimized a surface roughness and a low porosity.

As a representative of the anode functional layer, a porous Ni-Yttria Stabilized Zirconia (YSZ) is used like the aforementioned anode supporter. The anode functional layer has a different composition from the anode supporter.

Since a main purpose of the anode functional layer is to activate an electrochemical reaction at the anode, the anode function is designed to increase an electrochemical property rather than a mechanical property. Accordingly, not coarse YSZ powder but only fine YSZ powder is used as a material of the anode functional layer. In the present invention, the anode functional layer has a volume ratio between the Ni and the YSZ of 40:605∼70:30, and preferably 55:45∼45:55. When the volume ratio between the Ni and the YSZ is close to 40:60, a bonding strength between the anode functional layer and the electrolyte is increased thus to decrease an occurrence probability of an interfacial defect at the time of a simultaneous sintering (co-sintering). Also, when the volume ratio between the Ni and the YSZ is close to 70:30, the anode functional layer has an enhanced electrochemical activation thus to decrease an activation polarization loss at the anode. An average diameter ratio between the YSZ and the NiO was 6:1~3:1.

The porosity of the anode functional layer was 10%~30% lower than that of the anode supporter. However, since the anode functional layer had a maximum thickness less than 50µm, a concentration polarization does not occur.

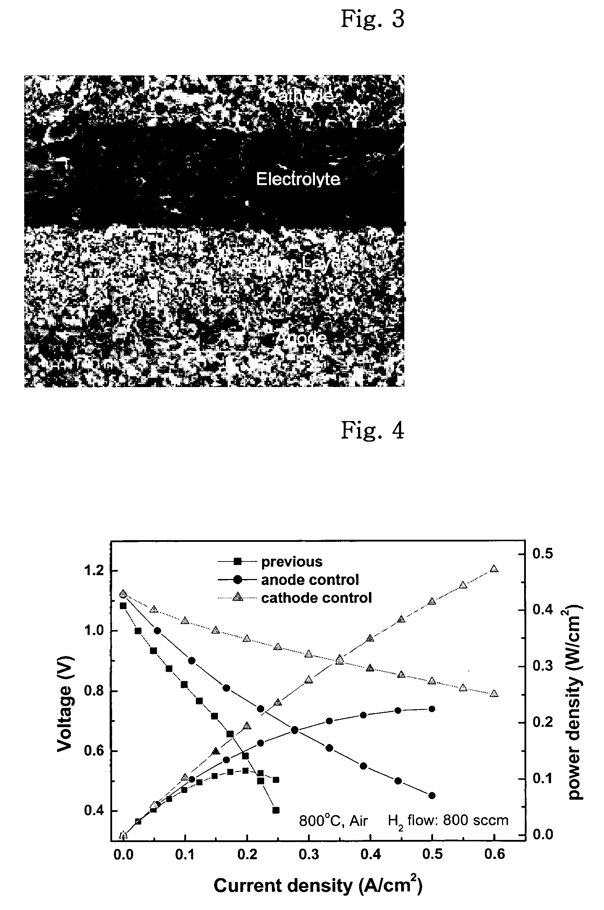

A microstructure and an enhanced performance of the single cell having the anode functional layer are shown in FIGS. 3 and 4. As shown in FIG. 4, when the anode functional layer is provided to the single cell, an output performance of the single cell was greatly increased.

### Electrolyte

A single material was mainly used as the electrolyte. However, a powder composition and a powder characteristic become different according to a thickness of an electrolyte to be used or a fabrication process. The electrolyte is formed of the same material as the ion-conductive oxide in composite anode. The most representative material of the electrolyte is a Yttria Stabilized Zirconia (YSZ), followed by Ceria doped with Sm or Gd, etc.

Since the electrolyte is formed of not a composite material but a single material, there is less difficulty in selecting a composition of the electrolyte. However, the electrolyte has to have a sufficient sintering degree to obtain a thin and dense layer at a simultaneous sintering temperature whereas the electrode has a porous structure. The electrolyte has to have a powder characteristic so as to make a thin layer of approximately 5µm. The most influential factor on a sintering degree and a thickness of the electrolyte is a size and a distribution of a electrolyte powder. In the present invention, powder having an average diameter less than 0.5µm was preferably used to fabricate the single cell, and especially powder having an average diameter of approximately 0.2µm was preferably used to construct a thin and dense electrolyte layer for a simultaneous sintered single cells.

### Cathode functional layer

A representative material for a cathode, LSM (La_{0.7}Sr_{0.3})_{0.95}MnO is a pure electronic conductor thus to have a limitation in an electrochemical activity and an activation site for cathode reaction. Accordingly, a cathode functional layer is provided between the electrolyte and the cathode.

As the cathode functional layer ,a composite between an ion-conductive material and a material of the cathode was mainly used. Herein, not a composite between a metal and an oxide but a composite between an oxide and an oxide has to be used due to an oxidation atmosphere at the cathode. Most preferably, a composite between an ion-conductive oxide of the electrolyte and an electron-conductive oxide of the cathode is used as the cathode functional layer. Herein, a ratio between the ion-conductor and the electron-conductor is controlled so that a concentration of an active reaction sites necessary to an electrochemical reaction can be maximized, so that an interface bonding characteristic with the electrolyte can be increased, and so that an inconsistency point between the cathode and the electrolyte in physical and chemical characteristics can be compensated.

In the present invention, a composite between YSZ that is an ion-conductive oxide applied to the electrolyte and LSM that is an electron-conductive oxide, was used for cathode. An average diameter ratio between the electron-conductive oxide and the ion-conductive oxide was 6:1~2:1. The LSM had an average diameter of approximately 1µm, and the YSZ has an average diameter of approximately 0.2µm.

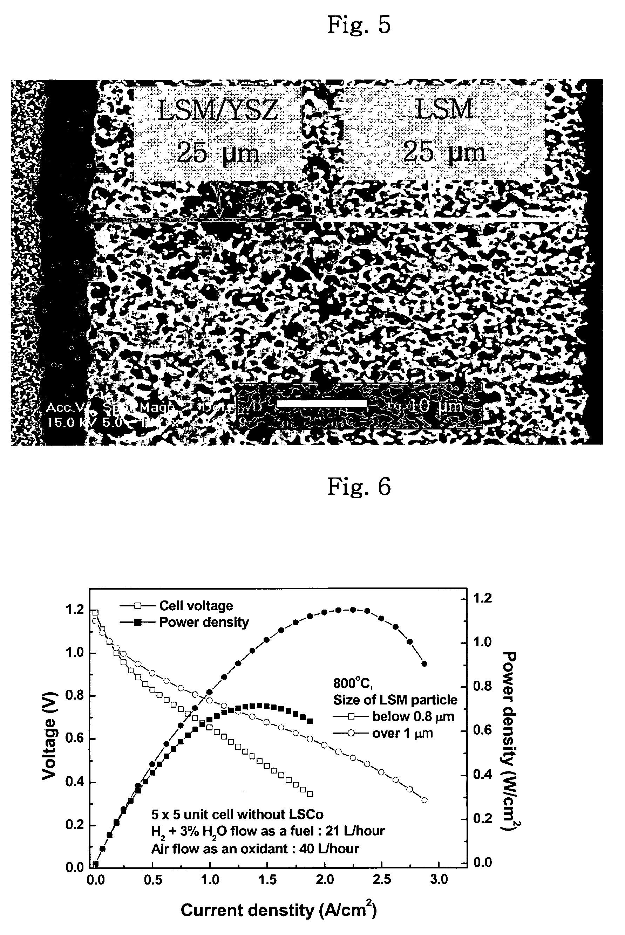

The LSM and the YSZ were mixed to each other with a volume ratio therebetween of 30:705∼70:30. The cathode functional layer has a different performance according to a mixture ratio between the LSM and the YSZ like the aforementioned anode functional layer. When the volume ratio between the LSM and the YSZ is close to 30:70, a bonding characteristic between the electrolyte and the cathode control is enhanced thus to decrease a probability of an interfacial defect generation during a fabrication process or an operation under a thermal cycle condition. On the contrary, when the volume ratio between the LSM and the YSZ is close to 70:30, a conductivity and an electrochemical activity of the cathode functional layer are enhanced thus to decrease an activation polarization loss at the cathode. A porosity of the cathode functional layer is decreased (20%~25%) when the volume ratio between the LSM and the YSZ is close to 30:70, but is increased (maximum 40%) when the volume ratio between the LSM and the YSZ is close to 70:30. As shown in FIG. 5, the cathode functional layer has a thickness less than 25µm. Accordingly, the porosity of the cathode functional layer need not be greatly increased, and an optimum volume ratio between the LSM and the YSZ is 55:455∼45:55. FIG. 4 shows an enhanced performance of the single cell by the cathode functional layer. As shown in FIG. 4, the performance of the single cell was greatly enhanced by more than two times when the cathode functional layer was additionally provided to the single cell.

### Cathode

As a material of the cathode, Perovskite-based oxide represented as an LSM was mainly used. Since the cathode is not too thick as much as like the anode, a limitation in a porosity is not great. A preferable porosity of the cathode is 30%~35%. An catalytic activity of oxide is generally not higher than a metallic catalyst, and thus a cathode polarization loss can be minimized by smoothly supplying of gas into the cathode functional layer. Accordingly, a microstructure of the cathode layer has to be appropriately controlled.

In the present invention, a particle diameter of the electron-conductive oxide for the cathode was larger than that of the electron-conductive oxide for the cathode functional layer. Preferably, an average particle diameter ratio between the electron-coductive oxide of the cathode and the electron-conductive oxide of the cathode functional layer is 2:1~1.5:1. In the present invention, LSM powder having an average diameter of approximately 1.5µm larger than the average diameter of approximately 1µm of the LSM powder for the cathode functional layer was used for the cathode, resulting in a high performance of the single cell. The porosity of the cathode was increased by using the coarse LSM powder, thereby smoothly supplying gas to the cathode functional layer and thus enhancing the performance of the single cell. The enhanced performance of the single cell was shown in FIG. 6.

### Current Collect Layer

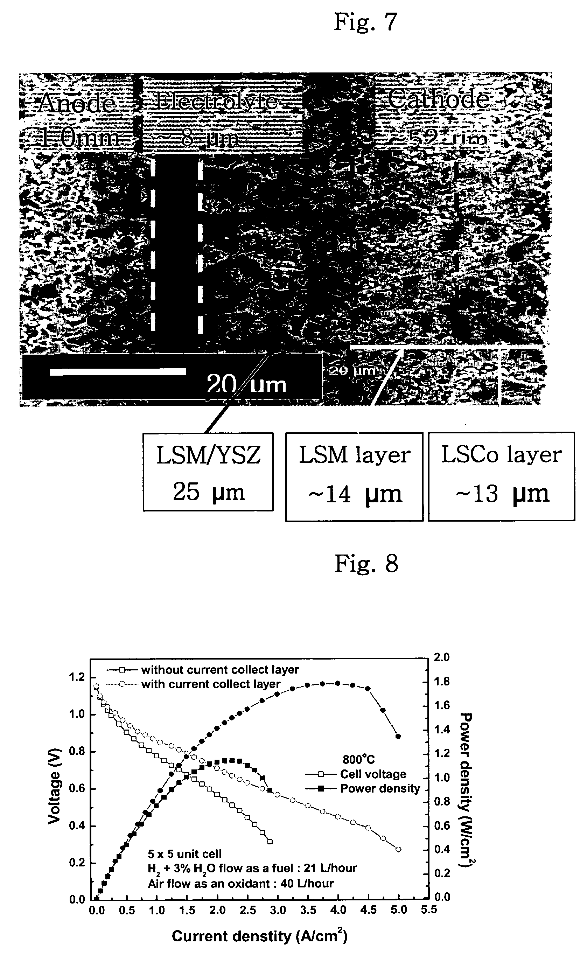

In order to enhance a contact resistance with a interconnector or separator at the time of extracting a current from the cathode, an oxide having a high electrical conductivity was added on top of the LSM cathode as a current collect layer. The high electrical conducting oxide is LSC (La_{0.84}Sr_{0.16}CoO) having a higher electron-conductivity than the aforementioned LSM. The LSC powder had an average diameter of 0.5~0.8µm with consideration of a bonding strength with the cathode and a thermal expansion coefficient mismatch with the cathode. A porosity of the current collect layer was 30%~35%. FIG. 7 is a photo showing a microstructure of the single cell that the high electronic conducting oxide was added on top of the cathode as the current collect layer. An enhanced performance of the single cell when the high electronic conducting oxide was used as the current collect layer was shown in FIG. 8. Referring to FIG. 8, the performance of the single cell was increased by approximately 30% when the high electronic conducting oxide was used as the current collect layer.

In the present invention, an anode supported single cell having a high performance and a large area can be implemented, and a maximum performance thereof can be implemented at each operation condition. The composition of the SOFC can be equally applicable to a new material and a new structure, which enables a maximum performance of the fuel cell at each operation condition.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An anode supporter for a solid oxide fuel cell (SOFC) implemented as a composite between an ion-conductive oxide and a transition metal oxide having an electron conductivity, in which coarse powder and fine power having an average particle diameter ratio of 20:1~5:1 are used as the ion-conductive oxide.

2. The anode supporter for a SOFC of claim 1, wherein the ion-conductive oxide is selected from a group consisting of doped zirconia, doped ceria, Perovskite-based oxide, and a combination therebetween, and a volume ratio_between the coarse powder and the fine powder is 55:455∼45:55.

3. The anode supporter for a SOFC of claim 1, wherein the transition metal oxide (Ni, Cu, Fe-based oxide, etc) has a particle diameter smaller than that of the coarse ion-conductive powder, and an average diameter ratio between the transition metal oxide and the fine ion-conductive powder is 6:1~3:1.

4. The anode supporter for a SOFC of claim 1, wherein a volume ratio between the ion-conductive oxide and the metal in a reduced state is 65:355∼55:45.

5. A solid oxide fuel cell (SOFC) having the anode supporter of one of claims 1 to 4, wherein an anode functional layer, an electrolyte, a cathode functional layer, a cathode, and a current collect layer are sequentially formed on the anode supporter.

6. The solid oxide fuel cell of claim 5, wherein the anode functional layer uses an ion-conductive oxide and a transition metal oxide as a starting material, the ion-conductive oxide is selected from a group consisting of doped zirconia, doped ceria, Perovskite-based oxide, and a combination therebetween, the ion-conductive oxide has a particle diameter having an intermediate size between the coarse powder and the fine powder used at the anode supporter, and the transition metal oxide includes a metal having a catalyst activation such as Ni, Cu, Fe etc.

7. The solid oxide fuel cell of claim 6, wherein an average diameter ratio between the ion-conductive oxide and the transition metal oxide is 6:1~3:1.

8. The solid oxide fuel cell of claim 6, wherein a volume ratio between the ion-conductive oxide and the transition metal oxide is 55:455∼45:55.

9. The solid oxide fuel cell of claim 6, wherein a porosity of the anode functional layer is 10%~30% in a reduced state.

10. The solid oxide fuel cell of claim 5, wherein the electrolyte is formed of doped zirconia, doped ceria, Perovskite based oxide, and a combination therebetween, and powder having an average diameter less than 0.5µm is used thus to construct an electrolyte having a thickness less than 10µm.

11. The solid oxide fuel cell of claim 5, wherein the cathode functional layer is a composite consisting of LSM (La_{0.7}Sr_{0.3})_{0.95}MnO, Perovskite based electron- conductivity oxide, doped zirconia, doped ceria, and Perovskite based ion-conductive oxide, and an average diameter ratio between the electron-conductive oxide and the ion-conductive oxide was 6:1~2:1.

12. The solid oxide fuel cell of claim 11, wherein a volume ratio between the electron-conductive oxide and the ion-conductive oxide is 55:455∼45:55.

13. The solid oxide fuel cell of claim 5, wherein a porosity of the cathode functional layer is 25%~30%.

14. The solid oxide fuel cell of claim 5, wherein the cathode is formed of LSM (La_{0.7}Sr_{0.3})_{0.95}MnO and electron-conductive oxide used to the cathode functional layer among Perovskite-based oxide derived from the LSM, and an average diameter ratio between the electron-conductive oxide of the cathode and the electron-conductive oxide of the cathode functional layer is 2:1~5:1.

15. The solid oxide fuel cell of claim 5, wherein a porosity of the cathode is 30%~35%.

16. The solid oxide fuel cell of claim 5, wherein the current collect layer is formed of LSC (La_{0.84}Sr_{0.16}CoO) or Perovskite-based electron-conductive oxide, and a porosity of the current collect layer is 30%~35%.
